# EUROPEAN PATENT APPLICATION

(11) **EP 4 557 199 A1**
(43) Date of publication of application: **21.05.2025**
(21) Application number: 23859312.3
(22) Date of filing: 28.08.2023
(51) Int. Cl.: G06Q 20/34

(54) **ULTRA-WIDEBAND-BASED PAYMENT METHOD AND APPARATUS, COMPUTER DEVICE, AND PAYMENT TERMINAL**

(30) Priority: 29.08.2022 CN 202211041656
(71) Applicant: DIGITAL CURRENCY INSTITUTE, THE PEOPLE'S BANK OF CHINA, Beijing 100071 (CN)
(72) Inventor: MU, Changchun, Beijing 100071 (CN); DI, Gang, Beijing 100071 (CN); XU, Kefeng, Beijing 100071 (CN); LIANG, Wei, Beijing 100071 (CN); BIAN, Yongchao, Beijing 100071 (CN); FENG, Xiyu, Beijing 100071 (CN)
(74) Representative: Winter, Brandl - Partnerschaft mbB
(86) International application number: PCT/CN2023/115304
(87) International publication number: WO 2024/046282

(57) **Abstract**

Disclosed are a payment method and apparatus based on an Ultra-Wideband (UWB), a computer device, and a payer terminal. The method includes: receiving payment request information sent by a payee terminal through a UWB channel, where the payment request information is configured to request a payer terminal to complete a target transaction, and the target transaction is to make payment from the payer terminal to the payee terminal; encrypting the payment request information with a first key, so as to obtain encrypted information; transmitting the encrypted information to a secure element through a secure channel, where the secure element is configured to verify the target transaction according to the encrypted information, and generate a payment result; and receiving the payment result returned by the secure element, and sending the payment result to the payee terminal through the UWB channel. According to the disclosure, the technical problem of transaction risks caused because transaction information may be intercepted during a transaction based on the UWB technology is solved.

## Description

The disclosure claims the priority to Chinese Patent Application No. 202211041656.9, filed with the Chinese Patent Office on August 29, 2022 and entitled "Payment Method and apparatus based on Ultra-Wideband, computer device, and payer terminal", which is incorporated in its entirety herein by reference.

### Technical Field

The disclosure relates to the technical field of digital currencies, and in particular to a payment method and apparatus based on an Ultra-Wideband, a computer device, and a payer terminal.

### Background

Owing to the value of a digital currency, payment can be completed in a network-independent scenario. In other words, the digital currency can transfer the value directly between a payee and a payer to complete a transaction, and thus can complete point-to-point payment with the assistance of various near-field payment technologies. In the related art, it is common practice to transfer value between two parties of a transaction through Wideless Fidelity (WIFI), Bluetooth, Near-Field Communication (NFC), etc., but problems may be caused accordingly. First of all, it is impossible to accurately detect a spatial position through WIFI and Bluetooth. Secondly, the NFC technology has an effective distance within 5 cm only in spite of high induction capacity. An Ultra-Wideband (UWB) technology can satisfy requirements of precise location in terms of a distance and a spatial angle, and stably transmit data, and thus can transfer the value in some scenarios. However, an existing end-to-end UWB chip can transmit only data to an application (APP) software layer for storage. In-process transaction information is likely to be intercepted by hardware engineers, leading to transaction risks.

No effective solution to the above problems has been provided yet.

### Summary

A payment method and apparatus based on an Ultra-Wideband, a computer device, and a payer terminal are provided in examples of the disclosure, so as to at least solve the technical problem that transaction information may be intercepted during a transaction based on an Ultra-Wideband (UWB) technology, leading to transaction risks.

In one aspect, a payment method based on an Ultra-Wideband (UWB) is provided according to the examples of the disclosure. The method includes: receiving payment request information sent by a payee terminal through a UWB channel, where the payment request information is configured to request a payer terminal to complete a target transaction, and the target transaction is to make payment from the payer terminal to the payee terminal; encrypting the payment request information with a first key, so as to obtain encrypted information; transmitting the encrypted information to a secure element through a secure channel, where the secure element is configured to verify the target transaction according to the encrypted information, and generate a payment result; and receiving the payment result returned by the secure element, and sending the payment result to the payee terminal through the UWB channel.

In another aspect, a payment method based on an Ultra-Wideband is further provided according to the examples of the disclosure. The method includes: receiving encrypted information transmitted by a UWB chip of a payer terminal through a secure channel, where the encrypted information is obtained by encrypting payment request information by the UWB chip with a first key, the payment request information is information configured to request to complete a target transaction, sent by a payee terminal, and received by the UWB chip, and the target transaction is to make payment from the payer terminal to the payee terminal; verifying the target transaction according to the encrypted information, and generating a payment result; and returning the payment result to the UWB chip.

In yet another aspect, a payment method based on an Ultra-Wideband is further provided according to the examples of the disclosure. The method includes: receiving, by an Ultra-Wideband (UWB) chip, payment request information, where the payment request information is sent by a payee terminal through a UWB channel, and configured to request a payer terminal to complete a target transaction, and the target transaction is to make payment from the payer terminal to the payee terminal; encrypting, by the UWB chip, the payment request information with a first key, so as to obtain encrypted information; transmitting, by the UWB chip, the encrypted information to a secure element through a secure channel; verifying, by the secure element, the target transaction according to the encrypted information, and generating a payment result; returning, by the secure element, the payment result to the UWB chip; and sending, by the UWB chip, the payment result to the payee terminal through the UWB channel.

In yet another aspect, a payment method based on an Ultra-Wideband is further provided according to the examples of the disclosure. The method includes: establishing, by an Ultra-Wideband (UWB) chip of a payee terminal, a UWB channel with a payer terminal by broadcasting a UWB signal; receiving, by the UWB chip of the payee terminal, a collection request sent by the payer terminal through the UWB channel, where the collection request is configured to request the payee terminal to complete a target transaction, and the target transaction is to make payment from the payer terminal to the payee terminal; transmitting, by the UWB chip of the payee terminal, the collection request to a secure element of the payee terminal; generating, by the secure element of the payee terminal, encrypted payment request information according to the collection request, and sending the payment request information to the UWB chip of the payee terminal; sending, by the UWB chip of the payee terminal, the payment request information to the payer terminal; receiving, by the UWB chip of the payee terminal, a payment result returned by the payer terminal, and transmitting the payment result to the secure element of the payee terminal; and verifying, by the secure element of the payee terminal, the target transaction based on the payment result.

In yet another aspect, a payment apparatus based on an Ultra-Wideband is further provided according to the examples of the disclosure. The apparatus includes: a first reception module configured to receive payment request information sent by a payee terminal through an Ultra-Wideband (UWB) channel, where the payment request information is configured to request a payer terminal to complete a target transaction, and the target transaction is to make payment from the payer terminal to the payee terminal; a first encryption module configured to encrypt the payment request information with a first key, so as to obtain encrypted information; a first transmission module configured to transmit the encrypted information to a secure element through a secure channel, where the secure element is configured to verify the target transaction according to the encrypted information, and generate a payment result; and a first sending module configured to receive the payment result returned by the secure element, and send the payment result to the payee terminal through the UWB channel.

In yet another aspect, a payment apparatus based on an Ultra-Wideband is further provided according to the examples of the disclosure. The apparatus includes: a second reception module configured to receive encrypted information transmitted by a UWB chip through a secure channel, where the encrypted information is obtained by encrypting payment request information by the UWB chip with a first key, and the payment request information is information configured to request to complete a target transaction, sent by a payee terminal, and received by the UWB chip; a first generation module configured to verify the target transaction according to the encrypted information, and generate a payment result; and a first return module configured to return the payment result to the UWB chip.

In yet another aspect, a payment apparatus based on an Ultra-Wideband is further provided according to the examples of the disclosure. The apparatus includes: a third reception module configured to receive, by a UWB chip, payment request information, where the payment request information is information sent by a payee terminal through a UWB channel, and configured to request a payer terminal to complete a target transaction, the target transaction is to make payment from the payer terminal to the payee terminal, and the payer terminal includes the UWB chip and a secure element; a second encryption module configured to encrypt, by the UWB chip, the payment request information with a first key, so as to obtain encrypted information; a second transmission module configured to transmit, by the UWB chip, the encrypted information to the secure element through a secure channel; a second generation module configured to verify, by the secure element, the target transaction according to the encrypted information, and generate a payment result; a second return module configured to return, by the secure element, the payment result to the UWB chip; and a second sending module configured to send, by the UWB chip, the payment result to the payee terminal through the UWB channel.

In yet another aspect, a payment apparatus based on an Ultra-Wideband is further provided according to the examples of the disclosure. The apparatus includes: an establishment module configured to establish, by an Ultra-Wideband (UWB) chip of a payee terminal, a UWB channel with a payer terminal by broadcasting a UWB signal; a third sending module configured to receive, by the UWB chip of the payee terminal, a collection request sent by the payer terminal through the UWB channel, where the collection request is configured to request the payee terminal to complete a target transaction, and the target transaction is to make payment from the payer terminal to the payee terminal; a third transmission module configured to transmit, by the UWB chip of the payee terminal, the collection request to a secure element of the payee terminal; a third encryption module configured to generate, by the secure element of the payee terminal, encrypted payment request information according to the collection request, and transmit the payment request information to the UWB chip of the payee terminal; a fourth sending module configured to send, by the UWB chip of the payee terminal, the payment request information to the payer terminal; a fourth reception module configured to receive, by the UWB chip of the payee terminal, a payment result returned by the payer terminal, and transmit the payment result to the secure element of the payee terminal; and a verification module configured to verify, by the secure element of the payee terminal, the target transaction based on the payment result.

In yet another aspect, a non-volatile storage medium is further provided according to the examples of the disclosure. The non-volatile storage medium includes a program stored, where the program controls a device where the non-volatile storage medium is positioned to execute any method for payment described above when run.

In still another aspect, a computer device is further provided according to the examples of the disclosure. The computer device includes a processor, where the processor is configured to run a program, and the program executes any method for payment described above when run.

In the examples of the disclosure, the payment request information is encrypted in the UWB chip of the payer terminal, where the payment request information is encrypted with the first key, so as to obtain the encrypted information, the secure channel transmits the encrypted information to the secure element, and receives the payment result returned by the secure element, and the payment result is sent to the payee terminal through the UWB channel. Accordingly, transaction security in a process when the payer terminal executes the target transaction is ensured, the technical effect of reducing transaction risks during a transaction based on a UWB technology is realized, and the technical problem of the transaction risks of that the transaction information may be intercepted during the transaction based on the UWB technology is solved.

### Brief Description of the Drawings

The accompanying drawings described herein are used for providing further understanding of the disclosure as a constituent part of the disclosure. Illustrative examples of the disclosure and their descriptions serve to explain the disclosure, instead of limiting the disclosure improperly. In the accompanying drawings:
Fig. 1 is a structural block diagram of hardware of a computer terminal configured to implement a payment method based on an Ultra-Wideband;
Fig. 2 is a schematic flowchart of a first payment method based on an Ultra-Wideband according to an example of the disclosure;
Fig. 3 is a schematic flowchart of a second payment method based on an Ultra-Wideband according to an example of the disclosure;
Fig. 4 is a schematic flowchart of a third payment method based on an Ultra-Wideband according to an example of the disclosure;
Fig. 5 is a schematic flowchart of a fourth payment method based on an Ultra-Wideband according to an example of the disclosure;
Fig. 6 is a sequence diagram of a payment method based on an Ultra-Wideband according to an optional embodiment of the disclosure;
Fig. 7 is a sequence diagram of a method for single-offline payment based on an Ultra-Wideband according to an optional embodiment of the disclosure;
Fig. 8 is a sequence diagram of a method for dual-offline payment based on an Ultra-Wideband according to an optional embodiment of the disclosure;
Fig. 9 is a structural block diagram of a first apparatus for payment based on an Ultra-Wideband according to an example of the disclosure;
Fig. 10 is a structural block diagram of a second apparatus for payment based on an Ultra-Wideband according to an example of the disclosure;
Fig. 11 is a structural block diagram of a third apparatus for payment based on an Ultra-Wideband according to an example of the disclosure;
Fig. 12 is a structural block diagram of a fourth apparatus for payment based on an Ultra-Wideband according to an example of the disclosure; and
Fig. 13 is a structural block diagram of a payer terminal according to an example of the disclosure.

### Detailed Description of the Embodiments

In order to enable those skilled in the art to better understand solutions of the disclosure, the technical solutions in examples of the disclosure will be clearly and comprehensively described below in conjunction with the accompanying drawings in the examples of the disclosure. Apparently, the examples described are merely some examples rather than all examples of the disclosure. Based on the examples of the disclosure, all other examples derived by those of ordinary skill in the art without creative efforts should fall within the scope of protection of the disclosure.

It should be noted that the terms "first", "second", etc. in the description, claims, and the above accompanying drawings of the disclosure are used for distinguishing between similar objects, instead of necessarily describing a specific sequence or a successive order. It should be understood that data used in this way can be interchanged where appropriate, so that the examples of the disclosure described herein can be implemented in other sequences than those illustrated or described herein. In addition, the terms "comprise", "include", "have", and their any variations are intended to cover non-exclusive inclusions. For example, a process, method, system, product, or device encompassing a series of steps or units can include other steps or units that are not explicitly listed or are inherent to the process, method, product, or device, without being limited to those steps or units explicitly listed.

An example of a payment method based on an Ultra-Wideband is provided according to the examples of the disclosure. It should be noted that steps shown in the flowcharts of the accompanying drawings can be executed in a computer system, such as a set of computer-executable instructions. Moreover, although logic sequences are shown in the flowcharts, in some cases, the steps shown or described can be executed in an order different from those herein.

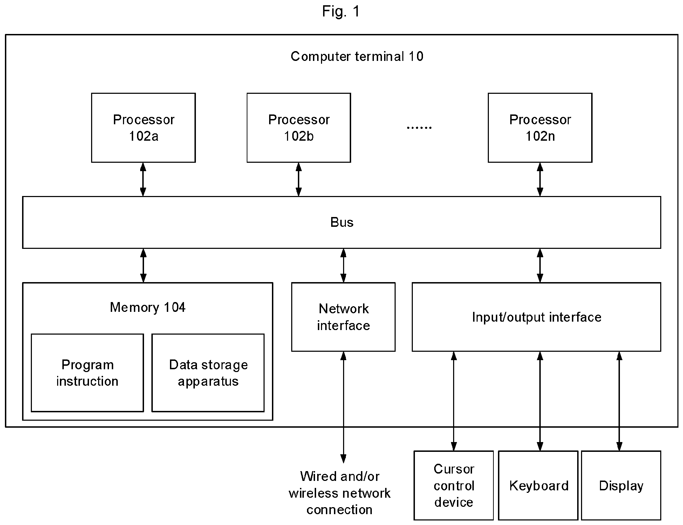

A method example according to a first example of the disclosure can be executed in a mobile terminal, a computer terminal, or a similar computation apparatus. Fig. 1 is a structural block diagram of hardware of a computer terminal configured to implement a payment method based on an Ultra-Wideband. As shown in Fig. 1, the computer terminal 10 can include one or more processors (shown as 102a, 102b,..., and 102n in the figure), and a memory 104 configured to store data, where the processors can include, but are not limited to, a microcontroller unit (MCU), a field programmable gate array (FPGA), etc. In addition, the computer terminal can further include a display, an input/output interface (I/O interface), a universal serial bus (USB) port (which can be included as one port of a bus), a network interface, a power supply, and/or a camera. Those of ordinary skill in the art can understand that the structure shown in Fig. 1 is merely illustrative, and does not limit the structure of the above electronic apparatus. For example, the computer terminal 10 can further include more or fewer components than those shown in Fig. 1, or have a configuration different from that shown in Fig. 1.

It should be noted that the above one or more processors and/or other data processing circuits can generally be referred to as "data processing circuits" herein. The data processing circuits can be embodied as software, hardware, firmware, or any other combinations in all or in part. In addition, the data processing circuits can be single stand-alone processing modules, or incorporated in all or in part into any one of other elements in the computer terminal 10. As involved in the examples of the disclosure, the data processing circuits act as a type of processor control (for example, configured to select a variable-resistance terminal path connected to the interface).

The memory 104 can be configured to store a software program and a module of application software, for example, a program instruction/data storage apparatus corresponding to the method for payment in the examples of the disclosure. The processor runs the software program and module stored in the memory 104, so as to execute various function applications and data processing, i.e. to implement the method for payment of the above application. The memory 104 can include a high-speed random access memory, and can further include a non-volatile memory, such as one or more magnetic storage apparatuses, flash memories, and other non-volatile solid-state memories. In some instances, the memory 104 can further include memories remotely configured relative to the processor. These remote memories can be connected to the computer terminal 10 via a network. Instances of the above network include, but are not limited to, the Internet, an intranet, a local area network, a mobile communication network, and their combinations.

The display can be, for example, a touch screen type liquid crystal display (LCD) that can enable a user to interact with a user interface of the computer terminal 10.

In the related art, an Ultra-Wideband (UWB) payment method lacks security guarantee at a hardware level. In a scenario where the payment is made through a UWB technology, payment risks may be generated if payment information is truncated before reaching a secure element.

The solution of the disclosure is applied to a UWB chip of a payer terminal, where a key is stored in the UWB chip, and transaction information received by the UWB chip is encrypted, and then transmitted to the secure element through a secure line, so that the security of the UWB payment means is ensured.

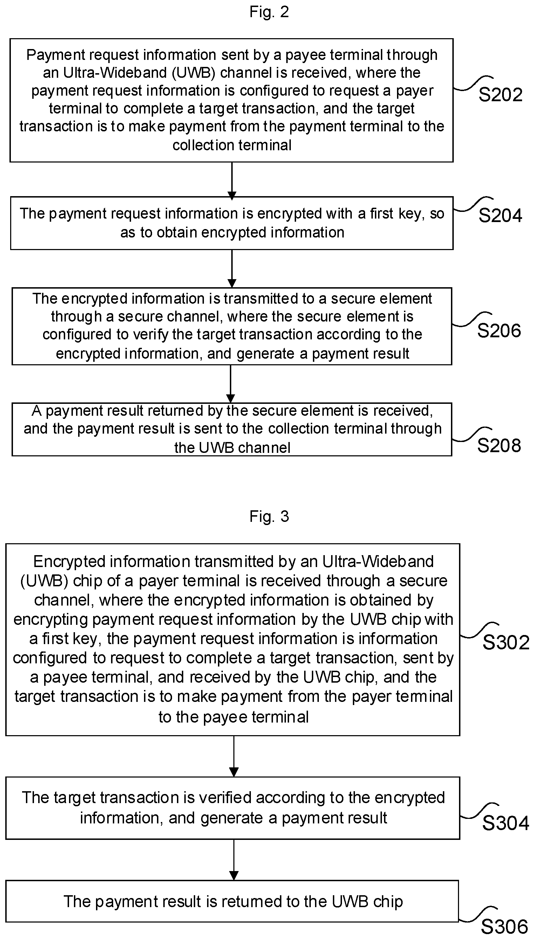

Fig. 2 is a schematic flowchart of a first payment method based on an Ultra-Wideband according to an example of the disclosure. Optionally, the first payment method may be applied to the UWB chip of the payer terminal. As shown in Fig. 2, the method includes:

S202, payment request information sent by a payee terminal through an Ultra-Wideband (UWB) channel is received, where the payment request information is configured to request a payer terminal to complete a target transaction, and the target transaction is to make payment from the payer terminal to the payee terminal.

Optionally, in a transaction solution in which a value is transferred through the UWB technology, the payee terminal may be, for example, an automatic charging apparatus in a park, such as an entrance ticket charging apparatus, and an entrance gate, and the payer terminal may be a smart device carried by a tourist, having a UWB chip, and supporting an Ultra-Wideband function. It can be understood by those skilled in the art that standby power of the UWB chip is very low, so that the UWB chip of the payer terminal can be in a working state at any time, and the payee terminal broadcasts a low-power consumption UWB signal at any time. When the UWB chip of the payer terminal detects the UWB signal broadcast by the payee terminal, the payer terminal can be connected to the payee terminal actively, so as to establish connection to perform the target transaction, and in other words, the payer terminal pays a fee (such as an entrance fee) to the payee terminal.

It should be noted that in a scenario where a value of a digital currency is exchanged through the UWB technology, a payee and a payer may agree to a password-free payment protocol by default. In other words, the payee directly sends the payment request information to the payer terminal of the payer through the payee terminal, so as to require the payer to make the payment. After verifying that the identity of the payee terminal is legal, the payer makes the payment to the payee directly without inputting a password, etc., so that the payment is made conveniently and rapidly.

S204, the payment request information is encrypted with a first key, so as to obtain encrypted information. It should be noted that the first key may belong to symmetric keys or asymmetric keys.

As an optional example, the step that the payment request information is encrypted with a first key, so as to obtain encrypted information may be implemented as follows: the first key corresponding to a secure channel is invoked, where the first key is pre-stored in the UWB chip of the payer terminal; and the payment request information is encrypted with the first key, so as to obtain the encrypted information.

The first key may be pre-stored in the UWB chip of the payer terminal. Those skilled in the art can understand that the UWB chip has a small storage space, so as to store a key with a moderate length for encrypting data. Optionally, a size of a storage space in the UWB chip generally consists of hundreds of bytes. Accordingly, a key that may be selected as the first key should be a type of key with a length within hundreds of bytes. If belonging to the asymmetric keys, the first key is a private key of a key pair.

As an optional example, a key type of the first key includes either one of an elliptic curve encryption algorithm key and a Rivest-Shamir-Adleman (RSA) algorithm key. The elliptic curve encryption algorithm key may employ one of a plurality of specific key forms. For example, an elliptic curve cryptography (ECC) key or an SM2 state-secret elliptic curve encryption algorithm key may be employed. An RSA algorithm is short for the Ronald-Adi-Leonard encryption algorithm, and a key generated based on the encryption algorithm is called the RSA algorithm key.

S206, the encrypted information is transmitted to a secure element through a secure channel, where the secure element is configured to verify the target transaction according to the encrypted information, and generate a payment result.

As an optional example, the secure channel may be a physical transmission channel between the UWB chip of the payer terminal and the secure element, and the UWB chip may encrypt only data transmitted through the secure channel by means of the first key, and transmit the encrypted information through the physical transmission channel, so as to ensure security of the transaction between the UWB chip and the secure element.

It should be noted that the payment request information acquired by the UWB chip of the payer terminal through the UWB signal may be information that has undergone service encryption through the payee terminal. For example, after the payee terminal generates a payment request requiring the payer terminal to pay a fee, the secure element of the payee terminal firstly performs service encryption on the payment request, so as to obtain the payment request information that has undergone the service encryption. Then, the payment request information is transmitted from the secure element of the payee terminal to the UWB chip of the payee terminal through the channel between the secure element of the payee terminal and the UWB chip of the payee terminal. Finally, the payment request information is sent to the UWB chip of the payer terminal through a UWB channel established between the UWB chip of the payee terminal and the UWB chip of the payer terminal, so that information leakage caused after a content of the payment request is intercepted in a transmission path is avoided. Optionally, the UWB chip of the payer terminal obtains the payment request information that has undergone the service encryption, and performs secondary encryption with the first key agreed between the UWB chip and the secure element after negotiation, so as to further ensure the security of the transaction.

Optionally, the secure channel may include at least one of an Inter-Integrated Circuit (I2C) bus and a Serial Peripheral Interface (SPI) bus. The I2C bus is a type of bidirectional two-wire synchronous serial bus. The UWB chip is connected to other devices through the I2C bus for data transmission. It should be noted that not all UWB chips support the SPI bus. UWB chips that do not support the SPI bus perform data transmission with the secure element through an I2C bus interface. The secure element can support both I2C bus transmission and SPI bus transmission.

S208, a payment result returned by the secure element is received, and sent to the payee terminal through the UWB channel. The payment result may include that the payer terminal completes the target transaction, or that the target transaction is not completed. For example, when there is not enough digital currency in the payer terminal, the payment result is that the payment is not completed. Optionally, when receiving the payment result that the payer terminal completes the target transaction, the payee terminal may record the information, and open a door or gate for the payer to pass for a visit.

Through the above steps, the payment request information is encrypted in the UWB chip of the payer terminal, where the payment request information is encrypted with the first key, so as to obtain the encrypted information, the secure channel transmits the encrypted information to the secure element, and receives the payment result returned by the secure element, and the payment result is sent to the payee terminal through the UWB channel. Accordingly, transaction security in a process when the payer terminal executes the target transaction is ensured, the technical effect of reducing transaction risks during a transaction based on a UWB technology is realized, and the technical problem that transaction information may be intercepted during the transaction based on the UWB technology, leading to the transaction risks is solved.

As an optional example, the payment request information may include at least one of identity information of the payee terminal, authentication information, a collection amount, and a network state of the payee terminal. The identity information of the payee terminal, authentication information, collection amount, etc. may allow the payer terminal to verify legality of the transaction, determine whether to transfer the payment to the payee terminal, and determine an amount of the payment transferred. The network state of the payee terminal may allow the payer terminal to determine how to feed back the payment result to the payee terminal.

As an optional example, the payment result returned by the secure element may be received as follows: a digital currency string returned by the secure element is received in a case that the network state of the payee terminal is that the payee terminal is not connected to the Internet, where the payment result includes the digital currency string generated by the secure element according to the encrypted information; and payment state information returned by the secure element is received in a case that the network state of the payee terminal is that the payee terminal is connected to the Internet, where the payment result includes the payment state information, and the payment state information is configured to describe whether the payer terminal makes the payment to the payee terminal.

Two different scenarios of whether the network state of the payee terminal is that the payee terminal is connected to the Internet are provided in the optional example. The payee terminal that is not connected to the Internet cannot know whether the payer terminal makes the payment to complete the target transaction in other ways, so that the payer terminal needs to send the digital currency string generated after the target transaction is completed to the payee terminal, so as to allow the payee terminal to confirm collection. Thus, in such a scenario, the payment result returned by the secure element to the UWB chip of the payer terminal is the digital currency string generated by the secure element according to the target transaction. The UWB chip of the payer terminal will transmit the digital currency string to the payee terminal, so as to allow the payee terminal to confirm completion of the target transaction. The payee terminal that is connected to the Internet may be connected to a background of a bank over the Internet, and confirm that the payer completes the target transaction through an accounting system of the bank. In this case, the secure element of the payer terminal may merely return the payment state information indicating whether the payer completes the target transaction to the UWB chip of the payer terminal. The UWB chip of the payer terminal sends the payment state information to the payee terminal through the UWB channel. The payee terminal checks with the background of bank for a transaction result based on the payment state information.

Fig. 3 is a schematic flowchart of a second payment method based on an Ultra-Wideband according to an example of the disclosure. Optionally, the second payment method based on an Ultra-Wideband may be applied to a secure element of a payer terminal. As shown in Fig. 3, the method includes:
S302, encrypted information transmitted by an Ultra-Wideband (UWB) chip of the payer terminal is received through a secure channel, where the encrypted information is obtained after the UWB chip encrypts payment request information with a first key, the payment request information is information configured to request to complete a target transaction, sent by a payee terminal, and received by the UWB chip, and the target transaction is to make payment from the payer terminal to the payee terminal;
S304, the target transaction is verified according to the encrypted information, and a payment result is generated; and
S306, the payment result is returned to the UWB chip.

Through the above steps, the payment request information is encrypted in the UWB chip of the payer terminal, where the payment request information is encrypted with the first key, so as to obtain the encrypted information, the secure channel transmits the encrypted information to the secure element, and receives the payment result returned by the secure element, and the payment result is sent to the payee terminal through the UWB channel. Accordingly, transaction security in a process when the payer terminal executes the target transaction is ensured, the technical effect of reducing transaction risks during a transaction based on a UWB technology is realized, and the technical problem that transaction information may be intercepted during the transaction based on the UWB technology, leading to the transaction risks is solved.

As an optional example, the step that the target transaction is verified according to the encrypted information, and the payment result is generated may be implemented as follows: a second key corresponding to the secure channel is invoked, where the second key is pre-stored in the secure element, and matches the first key; the encrypted information is decrypted through the second key, so as to obtain the payment request information; and the target transaction is verified according to the payment request information, and the payment result is generated.

Optionally, if the first key belongs to asymmetric keys, the first key is a private key and the second key is a public key corresponding to the private key. The UWB chip may pre-negotiate with the secure element for the public key and the private key. If the first key belongs to the symmetric keys, the second key and the first key are the same.

As an optional example, the payment request information may include at least one of identity information of the payee terminal, authentication information, a collection amount, and a network state of the payee terminal.

As an optional example, the step that the target transaction is verified according to the encrypted information, and the payment result is generated may include: a digital currency string corresponding to the target transaction is generated according to the payment request information in a case that the network state of the payee terminal is that the payee terminal is not connected to the Internet, where the payment result includes the digital currency string; and payment state information corresponding to the target transaction is generated according to the payment request information in a case that the network state of the payee terminal is that the payee terminal is connected to the Internet, where the payment result includes the payment state information, and the payment state information is configured to describe whether the payment is made to the payee terminal.

As an optional example, a key type of the first key includes either one of an elliptic curve encryption algorithm key and an RSA algorithm key.

As an optional example, the secure channel includes at least one of an I2C bus and an SPI bus.

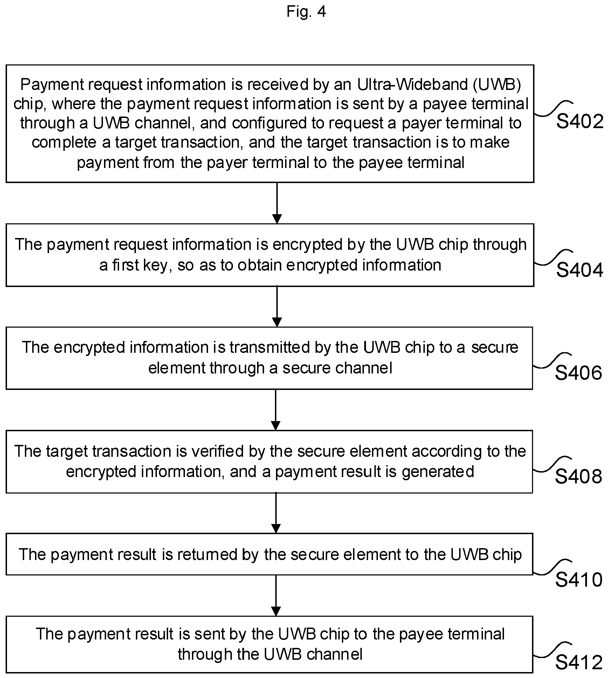

Fig. 4 is a schematic flowchart of a third payment method based on an Ultra-Wideband according to an example of the disclosure. Optionally, the third method for payment may be applied to a payer terminal. As shown in Fig. 4, the method includes:
S402, payment request information is received by an Ultra-Wideband (UWB) chip, where the payment request information is sent by a payee terminal through a UWB channel, and configured to request the payer terminal to complete a target transaction, and the target transaction is to make payment from the payer terminal to the payee terminal;
S404, the payment request information is encrypted by the UWB chip with a first key, so as to obtain encrypted information;
S406, the encrypted information is transmitted to a secure element by the UWB chip through a secure channel;
S408, the target transaction is verified by the secure element according to the encrypted information, and a payment result is generated;
S410, the payment result is returned to the UWB chip by the secure element; and
S412, the payment result is sent to the payee terminal by the UWB chip through the UWB channel.

Through the above steps, the payment request information is encrypted in the UWB chip of the payer terminal, where the payment request information is encrypted with the first key, so as to obtain the encrypted information, the secure channel transmits the encrypted information to the secure element, and receives the payment result returned by the secure element, and the payment result is sent to the payee terminal through the UWB channel. Accordingly, transaction security in a process when the payer terminal executes the target transaction is ensured, the technical effect of reducing transaction risks during a transaction based on a UWB technology is realized, and the technical problem of the transaction risks caused because transaction information may be intercepted during the transaction based on the UWB technology is solved.

As an optional example, the step that the payment request information is encrypted by the UWB chip with a first key, so as to obtain encrypted information includes: the first key corresponding to the secure channel is invoked by the UWB chip, where the first key is pre-stored in the UWB chip; and the payment request information is encrypted by the UWB chip with the first key, so as to obtain the encrypted information.

As an optional example, the step that the target transaction is verified by the secure element according to the encrypted information, and a payment result is generated include: a second key corresponding to the secure channel is invoked by the secure element, where the second key is pre-stored in the secure element, and matches the first key; the encrypted information is decrypted by the secure element through the second key, so as to obtain the payment request information; and the target transaction is verified by the secure element according to the payment request information, and the payment result is generated.

As an optional example, the payment request information includes at least one of identity information of the payee terminal, authentication information, a collection amount, and a network state of the payee terminal.

As an optional example, the step that the target transaction is verified by the secure element according to the payment request information, and the payment result is generated include: a digital currency string corresponding to the target transaction is generated by the secure element according to the payment request information in a case that the network state of the payee terminal is that the payee terminal is not connected to the Internet, where the payment result includes the digital currency string; and payment state information corresponding to the target transaction is generated by the secure element according to the payment request information in a case that the network state of the payee terminal is that the payee terminal is connected to the Internet, where the payment result includes the payment state information, and the payment state information is configured to describe whether the payment is made to the payee terminal.

As an optional example, a key type of the first key includes either one of an elliptic curve encryption algorithm key and an RSA algorithm key.

As an optional example, the secure channel includes at least one of an inter-integrated circuit (I2C) bus and a serial peripheral interface (SPI) bus.

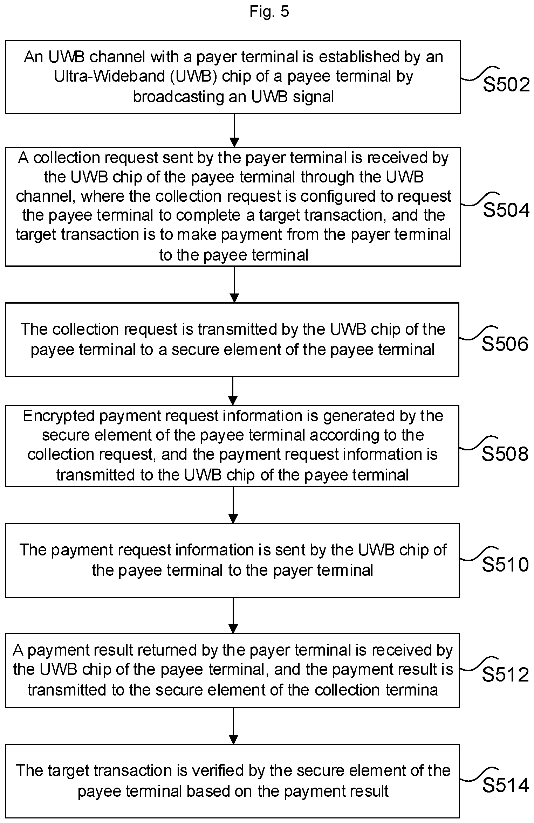

Fig. 5 is a schematic flowchart of a fourth payment method based on an Ultra-Wideband according to an example of the disclosure. Optionally, the fourth payment method may be applied to a payee terminal. As shown in Fig. 5, the method includes:
S502, an Ultra-Wideband (UWB) channel with a payer terminal is established by a UWB chip of the payee terminal by broadcasting a UWB signal;
S504, a collection request sent by the payer terminal is received by the UWB chip of the payee terminal through the UWB channel, where the collection request is configured to request the payee terminal to complete a target transaction, and the target transaction is to make payment from the payer terminal to the payee terminal;
S506, the collection request is transmitted to a secure element of the payee terminal by the UWB chip of the payee terminal;
S508, encrypted payment request information is generated by the secure element of the payee terminal according to the collection request, and the payment request information is transmitted to the UWB chip of the payee terminal;
S510, the payment request information is sent to the payer terminal by the UWB chip of the payee terminal;
S512, a payment result returned by the payer terminal is received by the UWB chip of the payee terminal, and the payment result is transmitted to the secure element of the payee terminal; and
S514, the target transaction is verified by the secure element of the payee terminal based on the payment result.

In the example, the payment method based on an Ultra-Wideband applied to the payee terminal is provided, so that the payee terminal can cooperate with the payer terminal to complete the target transaction based on the UWB channel.

As an optional example, the step that encrypted payment request information is generated by the secure element of the payee terminal according to the collection request may be implemented as follows: a networking state of the payee terminal is acquired from the payee terminal; a first encrypted collection mode request is generated by the secure element of the payee terminal in a case that the networking state of the payee terminal is online, where the payment request information includes the first collection mode request, and the first collection mode request is configured to instruct the payer terminal to return either one of the following two payment results: a digital currency string and payment state information; and a second encrypted collection mode request is generated by the secure element of the payee terminal in a case that the networking state of the payee terminal is offline, where the payment request information includes the second collection mode request, and the second collection mode request is configured to indicate that the payment result returned by the payer terminal is a digital currency string.

As an optional example, the step that the target transaction is verified by the secure element of the payee terminal based on the payment result may be implemented as follows: the digital currency string is verified by the secure element of the payee terminal in a case that the payment result is the digital currency string, and it is determined that the payer terminal completes the target transaction in a case that the digital currency string passes verification; accounting information is generated by the secure element of the payee terminal according to the payment state information in a case that the payment result is the payment state information, and the accounting information is sent to a background of a bank through the payee terminal; and an accounting information verification result returned by the background of the bank is received, and it is determined that the payer terminal completes the target transaction in a case that the accounting information verification result is that the accounting information passes verification.

In the above optional example, the payee terminal may select a way to complete the target transaction according to its own network state. For example, when both the payee terminal and the payer terminal can be connected to the Internet, the payer terminal may directly send the digital currency string generated to the payee terminal, so as to allow the payee terminal verifies collection after completing the target transaction. Alternatively, the payer terminal may account for the payment to the payee terminal, generate the accounting information, and then send the accounting information to the background of the bank. The payment is transferred from a payer account in the background of the bank to a payee account, payment state information indicating that the payer terminal has completed the target transaction is generated, and sent to the payee terminal. After receiving the payment state information, the payee terminal may check with the background of the bank whether the payer account transfers the payment to the payee account. The background of the bank feeds back a check result to the payee terminal, so that the payee terminal may determine whether the target transaction has been completed according to feedback information from the bank.

In addition, if either one of the payee terminal and the payer terminal cannot be connected to the Internet, the means to communicate with the background of the bank is lost. Thus, in order to verify the target transaction in this case, the payer terminal needs to send the digital currency string to the secure element of the payee terminal, and the secure element directly verifies the digital currency string, so as to determine that the digital currency string is legal and valid, and that the payer terminal has indeed transferred the payment corresponding to the target transaction to the payee terminal. In this case, the payee terminal can confirm that the target transaction has been completed, and provide subsequent services for the payer.

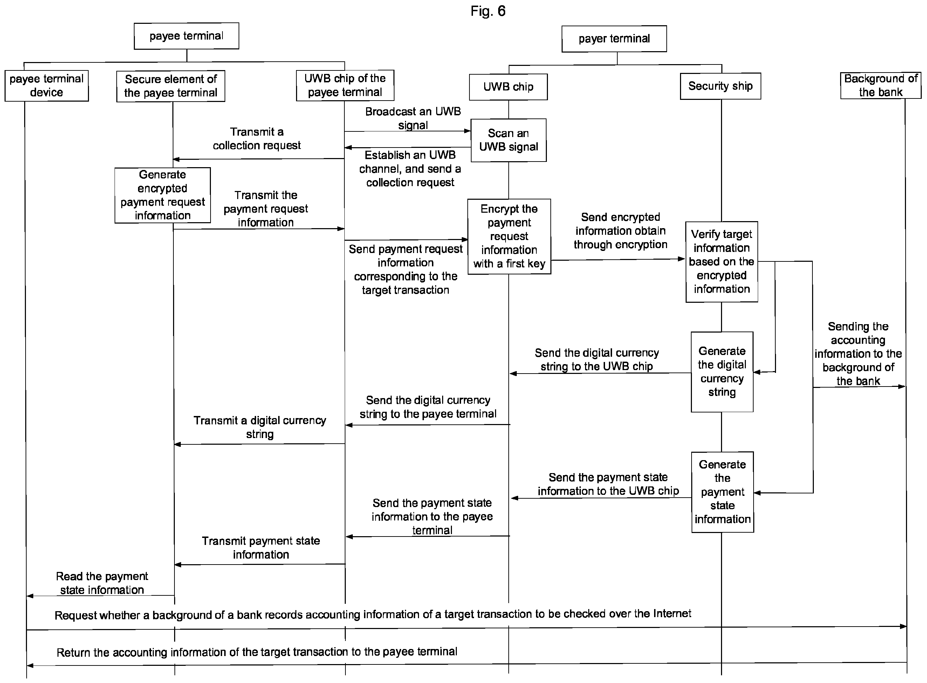

Fig. 6 is a sequence diagram of a payment method based on an Ultra-Wideband according to an optional embodiment of the disclosure. As shown in FIG. 6, a payer terminal and a payee terminal may complete a payment behavior corresponding to a target transaction based on the Ultra-Wideband through steps as follows:
The payee terminal located at an entrance of a scenic spot and configured for charging can continuously broadcast a UWB signal to the outside.

When a user (a tourist at the scenic spot) who carries the payer terminal (such as a smart phone) supporting a UWB function is going to enter the scenic spot, the UWB chip of the payer terminal continuously scans the UWB broadcast signal. When detecting a digital currency collection signal broadcast by the payee terminal located at the entrance of the scenic spot and configured for charging, the payer terminal is actively connected to the payee terminal, so as to establish the UWB channel for communication.

After connected to the payee terminal at the scenic spot, the payer terminal of the user sends a collection request to the payee terminal, prompting the payee terminal that the payer terminal needs to make payment to the payee terminal. The payee terminal enters an authentication mode after collecting information. The UWB chip of the payee terminal first transmits the collection request to a secure element of the payee terminal. After parsing the collection request, the secure element of the payee terminal knows whether the payer terminal has made the payment, and knows an amount due, identity information of the terminal, etc. from the collection request, then generates payment request information that has undergone service encryption, and transmits the payment request information to the UWB chip of the payee terminal. The UWB chip of the payee terminal transmits the payment request information to the UWB chip of the payer terminal through the UWB channel.

After receiving the payment request information, the UWB chip of the payer terminal may encrypt the payment request information with the first key, so as to obtain the encrypted information, then transmit the encrypted information to the Secure Element (SE) through an I2C secure channel. If authentication by the secure element is passed, the payment is completed, otherwise a payment action requested by the target transaction is refused, and the payment fails to be made by the user.

The UWB chip of the payer terminal returns the payment result to the payee terminal. If the payment result is the digital currency string, the digital currency string undergoes service encryption through a service key, and is then sent to the payee terminal. If the payment result is the payment state information, the payment state information is sent to the payee terminal.

After receiving the payment result fed back by the payer terminal, the UWB chip of the payee terminal transmits the payment result to the secure element of the payee terminal, and the secure element of the payee terminal verifies whether the target transaction is completed. When receiving the payment state information, the secure element of the payee terminal may prompt a payee terminal device to read the payment state information. Then, the payee terminal device (for example, an application in the device) checks with the background of the bank for the accounting information of the target transaction over the Internet, so as to confirm whether the target transaction is completed, and thus the target transaction is verified.

Through the above process, the user makes digital currency payment to a base station of tickets of the scenic spot.

The payee terminal at the entrance of the scenic spot controls the gate to open and allow the user to pass. Moreover, the APP in the mobile phone of the user prompts that the payment succeeds.

In the example shown in Fig. 6, both the payee terminal device and a payer terminal device need to be connected to the Internet, and communicate with the background of the bank over the Internet, so as to realize synchronization of the accounting information at the background of the bank, and thus whether the target transaction is legally completed is verified.

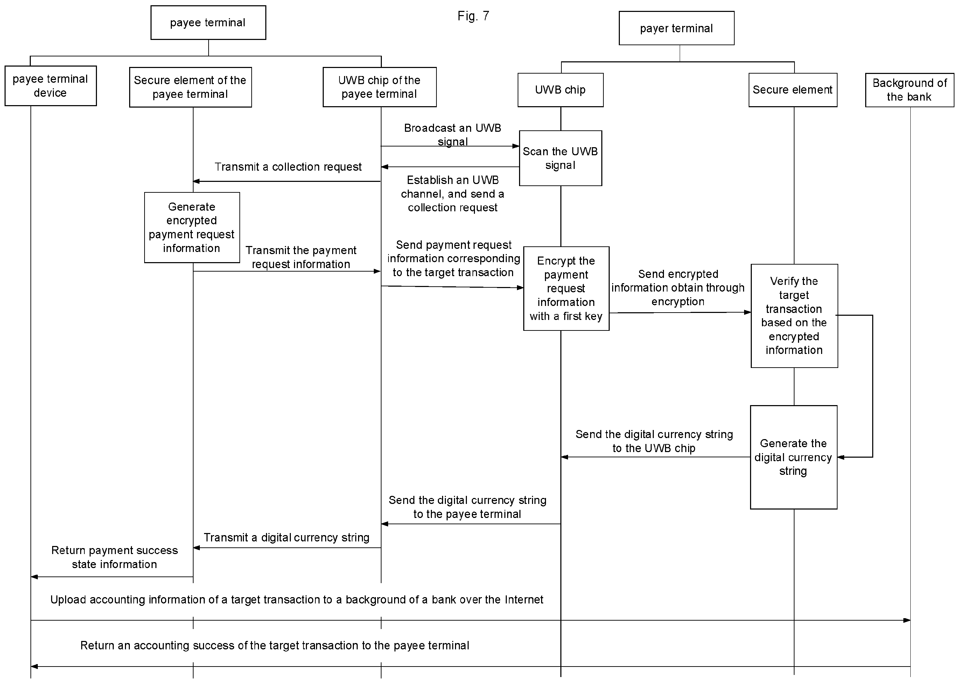

Fig. 7 is a sequence diagram of a method for a single-offline payment based on an Ultra-Wideband according to an optional embodiment of the disclosure. As shown in Fig. 7, based on the optional example, in a case that the payer terminal cannot be connected to the Internet, but the payee terminal can be connected to the Internet, the payer terminal and the payee terminal may complete a payment behavior corresponding to the target transaction based on the Ultra-Wideband as follows:
The payee terminal located at an entrance of a scenic spot and configured for charging can continuously broadcast a UWB signal to the outside.

When a user (a tourist at the scenic spot) who carries the payer terminal (such as a smart phone) supporting a UWB function is going to enter the scenic spot, the UWB chip of the payer terminal continuously scans the UWB broadcast signal. When detecting a digital currency collection signal broadcast by the payee terminal located at the entrance of the scenic spot and configured for charging, the payer terminal is actively connected to the payee terminal, so as to establish the UWB channel for communication.

After connected to the payee terminal at the scenic spot, the payer terminal of the user sends a collection request to the payee terminal, prompting the payee terminal that the payer terminal needs to make payment to the payee terminal. The payee terminal enters an authentication mode after collecting information. The UWB chip of the payee terminal first transmits the collection request to a secure element of the payee terminal. After parsing the collection request, the secure element of the payee terminal knows whether the payer terminal has made the payment, and knows an amount due, identity information of the terminal, etc. from the collection request, then generates payment request information that has undergone service encryption, and transmits the payment request information to the UWB chip of the payee terminal. The UWB chip of the payee terminal transmits the payment request information to the UWB chip of the payer terminal through the UWB channel.

After receiving the payment request information, the UWB chip of the payer terminal may encrypt the payment request information with the first key, so as to obtain the encrypted information, then transmit the encrypted information to the secure element (SE) through an I2C secure channel. If authentication by the secure element is passed, the payment is completed, otherwise a payment action requested by the target transaction is refused, and the payment fails to be made by the user.

The UWB chip of the payer terminal returns a payment result to the payee terminal, where the payment result is a digital currency string obtained after the payment is transferred to the payee terminal, and the digital currency string undergoes service encryption through a service key, and is then sent to the payee terminal.

After receiving the digital currency string fed back by the payer terminal, the UWB chip of the payee terminal transmits the digital currency string to the secure element of the payee terminal, and the secure element of the payee terminal verifies the digital currency string. If the digital currency string is verified to be legal and valid, it is confirmed that the target transaction succeeds.

The secure element of the payee terminal pushes payment success state information to a payee terminal device, so as to inform the payee terminal device that the collection succeeds.

The payee terminal device uploads accounting information of the target transaction to the background of the bank over the Internet, and receives information proving a success of accounting the target transaction from the background of the bank.

Through the above process, the user makes digital currency payment to a base station of tickets of the scenic spot.

The payee terminal at the entrance of the scenic spot controls the gate to open and allow the user to pass. Moreover, the APP in the mobile phone of the user prompts that the payment succeeds.

In the above steps, the payer terminal device in an offline state cannot be connected to the Internet, and thus cannot send the accounting information to the background of the bank for verification by the payee terminal device through the background of the bank. In this case, the payer terminal device can complete a payment action corresponding to the target transaction by directly sending the digital currency string to the secure element of the payee terminal, so as to ensure that the transaction proceeds normally.

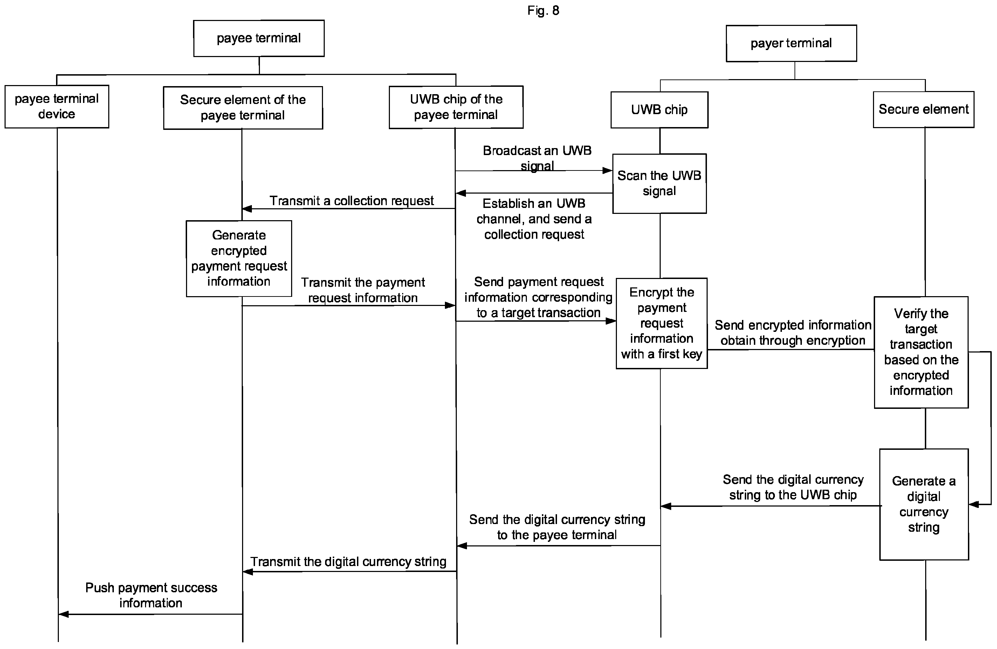

Fig. 8 is a sequence diagram of a method for a dual-offline payment based on an Ultra-Wideband according to an optional embodiment of the disclosure. In the optional example, neither the payer terminal nor the payee terminal can be connected to the Internet. In this case, both parties can complete a payment behavior corresponding to a target transaction based on steps shown in Fig. 8.

The payee terminal located at an entrance of a scenic spot and configured for charging can continuously broadcast a UWB signal to the outside.

When a user (a tourist at the scenic spot) who carries the payer terminal (such as a smart phone) supporting a UWB function is going to enter the scenic spot, the UWB chip of the payer terminal continuously scans the UWB broadcast signal. When detecting a digital currency collection signal broadcast by the payee terminal located at the entrance of the scenic spot and configured for charging, the payer terminal is actively connected to the payee terminal, so as to establish the UWB channel for communication.

After connected to the payee terminal at the scenic spot, the payer terminal of the user sends a collection request to the payee terminal, prompting the payee terminal that the payer terminal needs to make payment to the payee terminal. The payee terminal enters an authentication mode after collecting information. The UWB chip of the payee terminal first transmits the collection request to a secure element of the payee terminal. After parsing the collection request, the secure element of the payee terminal knows whether the payer terminal has made the payment, and knows an amount due, identity information of the terminal, etc. from the collection request, then generates payment request information that has undergone service encryption, and transmits the payment request information to the UWB chip of the payee terminal. The UWB chip of the payee terminal transmits the payment request information to the UWB chip of the payer terminal through the UWB channel.

After receiving the payment request information, the UWB chip of the payer terminal may encrypt the payment request information with the first key, so as to obtain the encrypted information, then transmit the encrypted information to the secure element (SE) through an I2C secure channel. If authentication by the secure element is passed, the payment is completed, otherwise a payment action requested by the target transaction is refused, and the payment fails to be made by the user.

The UWB chip of the payer terminal returns a payment result to the payee terminal, where the payment result is a digital currency string obtained after the payment is transferred to the payee terminal, and the digital currency string undergoes service encryption through a service key, and is then sent to the payee terminal.

After receiving the digital currency string fed back by the payer terminal, the UWB chip of the payee terminal transmits the digital currency string to the secure element of the payee terminal, and the secure element of the payee terminal verifies the digital currency string. If the digital currency string is verified to be legal and valid, it is confirmed that the target transaction succeeds.

The secure element of the payee terminal pushes payment success state information to a payee terminal device, so as to inform the payee terminal device that the collection succeeds. Through the above process, the user makes digital currency payment to a base station of tickets of the scenic spot.

The payee terminal at the entrance of the scenic spot controls the gate to open and allow the user to pass. Moreover, the APP in the mobile phone of the user prompts that the payment succeeds.

It should be noted that for the sake of simplicity of description, each foregoing method example is expressed as a series of combinations of actions, but those skilled in the art should know that the disclosure is not limited by the order of the actions described, because some steps can be performed in other orders or simultaneously according to the disclosure. Secondly, those skilled in the art should also know that the examples described in the description are preferred examples, and the actions and modules involved are not necessary for the disclosure.

Through the description of the above examples, those skilled in the art can clearly understand that the payment method based on an Ultra-Wideband according to the above example can be implemented by virtue of software and a necessary general-purpose hardware platform, and can also be certainly implemented through hardware. However, the former is a preferred embodiment in many cases. Based on such understanding, the technical solution of the disclosure in essence or the part that contributes to the prior art can be embodied in a form of a software product. The computer software product is stored in one storage medium (such as a read-only memory (ROM)/a random access memory (RAM), a magnetic disk, and an optical disk), and includes several instructions to make one terminal device (such as a mobile phone, a computer, a server, and a network device) execute the method in each example of the disclosure.

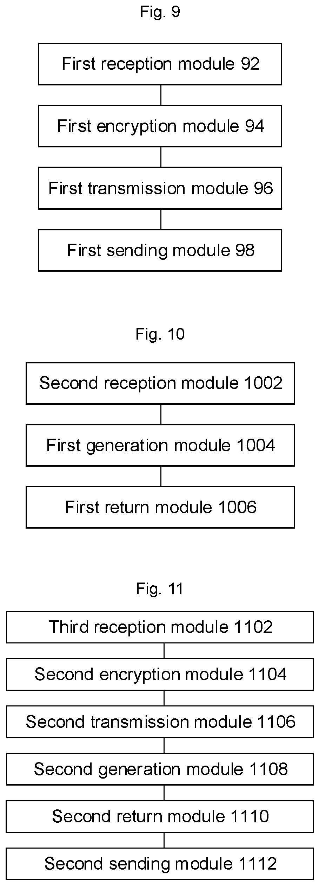

A payment apparatus configured to implement the above payment method based on an Ultra-Wideband is further provided according to the examples of the disclosure. Fig. 9 is a structural block diagram of a first payment apparatus based on an Ultra-Wideband according to an example of the disclosure. As shown in Fig. 9, the first payment apparatus based on an Ultra-Wideband includes a first reception module 92, a first encryption module 94, a first transmission module 96, and a first sending module 98. The first payment apparatus based on an Ultra-Wideband is described below.

The first reception module 92 is configured to receive payment request information sent by a payee terminal through an Ultra-Wideband (UWB) channel, where the payment request information is configured to request a payer terminal to complete a target transaction, and the target transaction is to make payment from the payer terminal to the payee terminal;
the first encryption module 94 is configured to encrypt the payment request information with a first key, so as to obtain encrypted information;
the first transmission module 96 is configured to transmit the encrypted information to a secure element through a secure channel, where the secure element is configured to verify the target transaction according to the encrypted information, and generate a payment result; and
the first sending module 98 is configured to receive the payment result returned by the secure element, and send the payment result to the payee terminal through the UWB channel.

It should be noted herein that the first reception module 92, the first encryption module 94, the first transmission module 96, and the first sending module 98 correspond to S202 to S208 in the example respectively, and a plurality of modules have same instances and application scenarios as those implemented by the corresponding steps, but are not limited to the contents disclosed in the above example. It should be noted that the above modules can be operated in the computer terminal 10 according to the example as part of the apparatus.

An apparatus for payment configured to implement the above payment method based on an Ultra-Wideband is further according to the examples of the disclosure. Fig. 10 is a structural block diagram of a second payment apparatus based on an Ultra-Wideband according to an example of the disclosure. As shown in Fig. 10, the second payment apparatus based on an Ultra-Wideband includes a second reception module 1002, a first generation module 1004, and a first return module 1006. The second payment apparatus based on an Ultra-Wideband is described below.

The second reception module 1002 is configured to receive encrypted information transmitted by a UWB chip through a secure channel, where the encrypted information is obtained after the UWB chip encrypts payment request information with a first key, and the payment request information is information configured to request to complete a target transaction, sent by a payee terminal, and received by the UWB chip;
the first generation module 1004 is configured to verify the target transaction according to the encrypted information, and generate a payment result; and
the first return module 1006 is configured to return the payment result to the UWB chip.

It should be noted herein that the second reception module 1002, the first generation module 1004, and the first return module 1006 correspond to S302 to S306 in the example respectively, and the three modules have same instances and application scenarios as those implemented by the corresponding steps, but are not limited to the contents disclosed in the above example. It should be noted that the above modules can be operated in the computer terminal 10 according to the example as part of the apparatus.

An apparatus for payment configured to implement the above payment method based on an Ultra-Wideband is further according to the examples of the disclosure. Fig. 11 is a structural block diagram of a third payment apparatus based on an Ultra-Wideband according to an example of the disclosure. As shown in Fig. 11, the third payment apparatus based on an Ultra-Wideband includes a third reception module 1102, a second encryption module 1104, a second transmission module 1106, a second generation module 1108, a second return module 1110, and a second sending module 1112. The third payment apparatus based on an Ultra-Wideband is described below.

The third reception module 1102 is configured to receive, by a UWB chip, payment request information, where the payment request information is sent by a payee terminal through a UWB channel, and configured to request a payer terminal to complete a target transaction, the target transaction is to make payment from the payer terminal to the payee terminal, and the payer terminal includes the UWB chip and a secure element;
the second encryption module 1104 is configured to encrypt, by the UWB chip, the payment request information with a first key, so as to obtain encrypted information;
the second transmission module 1106 is configured to transmit, by the UWB chip, the encrypted information to the secure element through a secure channel;
the second generation module 1108 is configured to verify, by the secure element, the target transaction according to the encrypted information, and generate a payment result;
the second return module 1110 is configured to return, by the secure element, the payment result to the UWB chip; and
the second sending module 1112 is configured to transmit, by the UWB chip, the payment result to the payee terminal through the UWB channel.

It should be noted herein that the third reception module 1102, the second encryption module 1104, the second transmission module 1106, the second generation module 1108, the second return module 1110, and the second sending module 1112 correspond to S402 to S412 in the example respectively, and a plurality of modules have same instances and application scenarios as those implemented by the corresponding steps, but are not limited to the contents disclosed in the above example. It should be noted that the above modules can be operated in the computer terminal 10 according to the example as part of the apparatus.

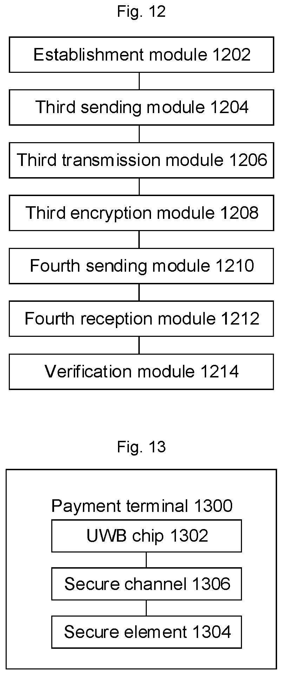

Fig. 12 is a structural block diagram of a fourth payment apparatus based on an Ultra-Wideband according to an example of the disclosure. As shown in Fig. 12, the fourth payment apparatus based on an Ultra-Wideband includes an establishment module 1202, a third sending module 1204, a third transmission module 1206, a third encryption module 1208, a fourth sending module 1210, a fourth reception module 1212, and a verification module 1214. The fourth payment apparatus based on an Ultra-Wideband is described below.

The establishment module 1202 is configured to establish, by a UWB chip of a payee terminal, an Ultra-Wideband (UWB) channel with a payer terminal by broadcasting a UWB signal;
the third sending module 1204 is configured to receive, by the UWB chip of the payee terminal, a collection request sent by the payer terminal through the UWB channel, where the collection request is configured to request the payee terminal to complete a target transaction, and the target transaction is to make payment from the payer terminal to the payee terminal;
the third transmission module 1206 is configured to transmit, by the UWB chip of the payee terminal, the collection request to a secure element of the payee terminal;
the third encryption module 1208 is configured to generate, by the secure element of the payee terminal, encrypted payment request information according to the collection request, and transmit the payment request information to the UWB chip of the payee terminal;
the fourth sending module 1210 is configured to send, by the UWB chip of the payee terminal, the payment request information to the payer terminal;
the fourth reception module 1212 is configured to receive, by the UWB chip of the payee terminal, a payment result returned by the payer terminal, and transmit the payment result to the secure element of the payee terminal; and
the verification module 1214 is configured to verify, by the secure element of the payee terminal, the target transaction based on the payment result.

It should be noted herein that the establishment module 1202, the third sending module 1204, the third transmission module 1206, the third encryption module 1208, the fourth sending module 1210, the fourth reception module 1212, and the verification module 1214 correspond to S502 to S514 in the example respectively, and a plurality of modules have same instances and application scenarios as those implemented by the corresponding steps, but are not limited to the contents disclosed in the above example. It should be noted that the above modules can be operated in the computer terminal 10 according to the example as part of the apparatus.

A payer terminal configured to implement the above payment method based on an Ultra-Wideband is further provided according to the examples of the disclosure. Fig. 13 is a structural block diagram of a payer terminal according to an example of the disclosure. As shown in Fig. 13, the payer terminal 1300 may include a UWB chip 1302, a secure element 1304, and a secure channel 1306; where the secure channel is connected to the UWB chip and the secure element; the UWB chip is configured to receive payment request information sent by a payee terminal through a UWB channel, where the payment request information is configured to request a payer terminal to complete a target transaction, and the target transaction is to make a payment from the payer terminal to the payee terminal; the UWB chip is further configured to encrypt the payment request information with a first key, so as to obtain encrypted information, transmit the encrypted information to the secure element through the secure channel, receive a payment result returned by the secure element, and send the payment result to the payee terminal through the UWB channel; and the secure element is configured to verify the target transaction according to the encrypted information, generate the payment result, and return the payment result to the UWB chip.

A computer device may be provided according to the examples of the disclosure. Optionally, in the example, the above computer device may be located in at least one of a plurality of network devices of a computer network. The computer device includes a memory and a processor.

The memory may be configured to store a software program and modules, for example, a program instruction/modules corresponding to the method and payment apparatus based on an Ultra-Wideband in the examples of the disclosure. The processor runs the software program and modules stored in the memory, so as to execute various function applications and data processing, i.e. to implement the above payment method based on an Ultra-Wideband. The memory may include a high-speed random access memory, and may further include a non-volatile memory, such as one or more magnetic storage apparatuses, flash memories, and other non-volatile solid-state memories. In some instances, the memory may further include memories remotely configured relative to the processor. These remote memories can be connected to the computer terminal over the network. Instances of the above network include, but are not limited to, the Internet, an intranet, a local area network, a mobile communication network, and their combinations.

The processor may invoke information and application programs stored in the memory through a transmission apparatus, so as to execute the following steps that payment request information sent by a payee terminal is received through an Ultra-Wideband (UWB) channel, where the payment request information is configured to request a payer terminal to complete a target transaction, and the target transaction is to make payment from the payer terminal to the payee terminal; the payment request information is encrypted with a first key, so as to obtain encrypted information; the encrypted information is transmitted to a secure element through a secure channel, where the secure element is configured to verify the target transaction according to the encrypted information, and generate a payment result; and the payment result returned by the secure element is received, and the payment result is sent to the payee terminal through the UWB channel.

Optionally, the above processor may further execute program codes of the following step that the payment request information is encrypted with a first key, so as to obtain encrypted information as follows: the first key corresponding to the secure channel is invoked, where the first key is pre-stored in the UWB chip of the payer terminal; and the payment request information is encrypted with the first key, so as to obtain the encrypted information.

Optionally, the above processor may further execute program codes of the following step as follows: a key type of the first key includes either one of an elliptic curve encryption algorithm key and an RSA algorithm key.

Optionally, the above processor may further execute program codes of the following step as follows: the secure channel includes at least one of an I2C bus and an SPI bus.

Optionally, the above processor may further execute program codes of the following step as follows: the payment request information includes at least one of identity information of the payee terminal, authentication information, a collection amount, and a network state of the payee terminal.

Optionally, the above processor may further execute program codes of the following step that the payment result returned by the secure element is received as follows: a digital currency string returned by the secure element is received in a case that the network state of the payee terminal is that the payee terminal is not connected to the Internet, where the payment result includes the digital currency string generated by the secure element according to the encrypted information; and payment state information returned by the secure element is received in a case that the network state of the payee terminal is that the payee terminal is connected to the Internet, where the payment result includes the payment state information, and the payment state information is configured to describe whether the payer terminal makes the payment to the payee terminal.

The processor may invoke information and applications stored in the memory through the transmission device, so as to execute the following step that: encrypted information transmitted by an Ultra-Wideband (UWB) chip of the payer terminal is received through a secure channel, where the encrypted information is obtained after the UWB chip encrypts payment request information with a first key, the payment request information is information configured to request a target transaction to be completed, sent by the payee terminal, and received by the UWB chip, and the target transaction is to make payment from the payer terminal to the payee terminal; the target transaction is verified according to the encrypted information, and a payment result is generated; and the payment result is returned to the UWB chip.

Optionally, the above processor may further execute program codes of the following step that: the target transaction is verified according to the encrypted information, and a payment result is generated as follows: a second key corresponding to the secure channel is invoked, where the second key is pre-stored in the secure element, and matches the first key; the encrypted information is decrypted through the second key, so as to obtain payment request information; and the target transaction is verified according to the payment request information, and the payment result is generated.

Optionally, the above processor may further execute program codes of the following step as follows: the payment request information includes at least one of identity information of the payee terminal, authentication information, a collection amount, and a network state of the payee terminal.

Optionally, the above processor may further execute program codes of the following step that the target transaction is verified according to the payment request information, and the payment result is generated as follows: a digital currency string corresponding to the target transaction is generated according to the payment request information in a case that the network state of the payee terminal is that the payee terminal is not connected to the Internet, where the payment result includes the digital currency string; and a payment state information corresponding to the target transaction is generated according to the payment request information in a case that the network state of the payee terminal is that the payee terminal is connected to the Internet, where the payment result includes the payment state information, and the payment state information is configured to describe whether the payment is made to the payee terminal.

Optionally, the above processor may further execute program codes of the following step as follows: a key type of the first key includes either one of an elliptic curve encryption algorithm key and an RSA algorithm key.

Optionally, the above processor may further execute program codes of the following step as follows: the secure channel includes at least one of an I2C bus and an SPI bus.

The processor may invoke information and applications stored in the memory through the transmission device, so as to execute the following step that: payment request information is received by an Ultra-Wideband (UWB) chip; where the payment request information is sent by a payee terminal through a UWB channel, and configured to request a payer terminal to complete a target transaction, and the target transaction is to make payment from the payer terminal to the payee terminal; the payment request information is encrypted by the UWB chip with a first key, so as to obtain encrypted information; the encrypted information is transmitted to a secure element by the UWB chip through a secure channel; the target transaction is verified by the secure element according to the encrypted information, and a payment result is generated; the payment result is returned to the UWB chip by the secure element; and the payment result is sent to the payee terminal by the UWB chip through the UWB channel.

Optionally, the above processor may further execute program codes of the following steps that the payment request information is encrypted by the UWB chip with a first key, so as to obtain encrypted information as follows: the first key corresponding to the secure channel is invoked by the UWB chip, where the first key is pre-stored in the UWB chip; and the payment request information is encrypted by the UWB chip with the first key, so as to obtain the encrypted information.

Optionally, the above processor may further execute program codes of the following step that the target transaction is verified by the secure element according to the encrypted information, and a payment result is generated as follows: a second key corresponding to the secure channel is invoked by the secure element, where the second key is pre-stored in the secure element, and matches the first key; the encrypted information is decrypted by the secure element through the second key, so as to obtain payment request information; and the target transaction is verified by the secure element according to the payment request information, and the payment result is generated.

Optionally, the above processor may further execute program codes of the following step as follows: the payment request information includes at least one of identity information of the payee terminal, authentication information, a collection amount, and a network state of the payee terminal.

Optionally, the above processor may further execute program codes of the following step that the target transaction is verified by the secure element according to the payment request information, and the payment result is generated as follows: a digital currency string corresponding to the target transaction is generated by the secure element according to the payment request information in a case that the network state of the payee terminal is that the payee terminal is not connected to the Internet, where the payment result includes the digital currency string; and a payment state information corresponding to the target transaction is generated by the secure element according to the payment request information in a case that the network state of the payee terminal is that the payee terminal is connected to the Internet, where the payment result includes the payment state information, and the payment state information is configured to describe whether the payment is made to the payee terminal.

Optionally, the above processor may further execute program codes of the following step as follows: a key type of the first key includes either one of an elliptic curve encryption algorithm key and an RSA algorithm key.

Optionally, the above processor may further execute program codes of the following step as follows: the secure channel includes at least one of an I2C bus and an SPI bus.

The processor may invoke information and applications stored in the memory through the transmission device, so as to execute the following steps that: an Ultra-Wideband (UWB) channel with a payer terminal is established by a UWB chip of a payee terminal by broadcasting a UWB signal; a collection request sent by the payer terminal is received by the UWB chip of the payee terminal through the UWB channel, where the collection request is configured to request the payee terminal to complete a target transaction, and the target transaction is to make payment from the payer terminal to the payee terminal; the collection request is transmitted to a secure element of the payee terminal by the UWB chip of the payee terminal; encrypted payment request information is obtained on the basis of encrypting the collection request by the secure element of the payee terminal, and the payment request information is transmitted to the UWB chip of the payee terminal; the payment request information is sent to the payer terminal by the UWB chip of the payee terminal; a payment result returned by the payer terminal is received by the UWB chip of the payee terminal, and the payment result is transmitted to the secure element of the payee terminal; and the target transaction is verified by the secure element of the payee terminal based on the payment result.

Optionally, the above processor may further execute program codes of the following step that encrypted payment request information is generated by the secure element of the payee terminal according to the collection request as follows: a networking state of the payee terminal is acquired from the payee terminal; a first encrypted collection mode request is generated by the secure element of the payee terminal in a case that the networking state of the payee terminal is online, where the payment request information includes the first collection mode request, and the first collection mode request is configured to instruct the payer terminal to return either one of the following two payment results: a digital currency string and payment state information; and a second encrypted collection mode request is generated by the secure element of the payee terminal in a case that the networking state of the payee terminal is offline, where the payment request information includes the second collection mode request, and the second collection mode request is configured to indicate that the payment result returned by the payer terminal is a digital currency string.

Optionally, the above processor may further execute program codes of the following step that the target transaction is verified by the secure chip of the payee terminal based on the payment result as follows: the digital currency string is verified by the secure element of the payee terminal in a case that the payment result is the digital currency string, and it is determined that the payer terminal completes the target transaction in a case that the digital currency string passes verification; accounting information is generated by the secure element of the payee terminal according to the payment state information in a case that the payment result is the payment state information, and the accounting information is sent to a background of a bank through the payee terminal; an accounting information verification result returned by the background of the bank is received, and it is determined that the payer terminal completes the target transaction in a case that the accounting information verification result is that the accounting information passes verification.

Those of ordinary skill in the art can understand that all or some steps in various methods in the above examples can be completed by instructing relevant hardware of the terminal device through the program. The program can be stored in a non-volatile storage medium, and the storage medium can include a flash disk, a read-only memory (ROM), a random access memory (RAM), a magnetic disk, an optical disk, etc.

A non-volatile storage medium is further provided in the examples of the disclosure. Optionally, in the example, the above non-volatile storage medium may be configured to store program codes executed by the payment method based on an Ultra-Wideband according to the above example.

Optionally, in the example, the above non-volatile storage medium may be located in any computer terminal in a computer terminal group in a computer network, or located in any mobile terminal in a mobile terminal group.

Optionally, in the example, the non-volatile storage medium is configured to store program codes for executing the following steps that: payment request information sent by a payee terminal is received through an Ultra-Wideband (UWB) channel, where the payment request information is configured to request a payer terminal to complete a target transaction, and the target transaction is to make payment from the payer terminal to the payee terminal; the payment request information is encrypted with a first key, so as to obtain encrypted information; the encrypted information is transmitted to a secure element through a secure channel, where the secure element is configured to verify the target transaction according to the encrypted information, and generate a payment result; and the payment result returned by the secure element is received, and the payment result is sent to the payee terminal through the UWB channel.

Optionally, in the example, the non-volatile storage medium is configured to store program codes for executing the following steps that payment request information sent by a payee terminal is received through an Ultra-Wideband (UWB) channel, where the payment request information is configured to request a payer terminal to complete a target transaction, and the target transaction is to make payment from the payer terminal to the payee terminal; the payment request information is encrypted with a first key, so as to obtain encrypted information; the encrypted information is transmitted to a secure element through a secure channel, where the secure element is configured to verify the target transaction according to the encrypted information, and generate a payment result; and the payment result returned by the secure element is received, and the payment result is sent to the payee terminal through the UWB channel.

Optionally, in the example, the non-volatile storage medium is configured to store program codes for executing the following step that the payment request information is encrypted with a first key, so as to obtain encrypted information as follows: the first key corresponding to the secure channel is invoked, where the first key is pre-stored in the UWB chip of the payer terminal; and the payment request information is encrypted with the first key, so as to obtain the encrypted information.

Optionally, in the example, the non-volatile storage medium is configured to store program codes for executing the following step as follows: a key type of the first key includes either one of an elliptic curve encryption algorithm key and an RSA algorithm key.

Optionally, in the example, the non-volatile storage medium is configured to store program codes for executing the following step as follows: the secure channel includes at least one of an I2C bus and an SPI bus.

Optionally, in the example, the non-volatile storage medium is configured to store program codes for executing the following step as follows: the payment request information includes at least one of identity information of the payee terminal, authentication information, a collection amount, and a network state of the payee terminal.

Optionally, in the example, the non-volatile storage medium is configured to store program codes for executing the following step that the payment result returned by the secure element is received as follows: a digital currency string returned by the secure element is received in a case that the network state of the payee terminal is that the payee terminal is not connected to the Internet, where the payment result includes the digital currency string generated by the secure element according to the encrypted information; and payment state information returned by the secure element is received in a case that the network state of the payee terminal is that the payee terminal is connected to the Internet, where the payment result includes the payment state information, and the payment state information is configured to describe whether the payer terminal makes the payment to the payee terminal.

Optionally, in the example, the non-volatile storage medium is configured to store program codes for executing the following step that encrypted information transmitted by an Ultra-Wideband (UWB) chip of the payer terminal is received through a secure channel, where the encrypted information is obtained after the UWB chip encrypts payment request information with a first key, the payment request information is information configured to request a target transaction to be completed, sent by the payee terminal, and received by the UWB chip, and the target transaction is to make payment from the payer terminal to the payee terminal; the target transaction is verified according to the encrypted information, and a payment result is generated; and the payment result is returned to the UWB chip.

Optionally, in the example, the non-volatile storage medium is configured to store program codes for executing the following step that the target transaction is verified according to the encrypted information, and the payment result is generated as follows: a second key corresponding to the secure channel is invoked, where the second key is pre-stored in the secure element, and matches the first key; the encrypted information is decrypted through the second key, so as to obtain payment request information; and the target transaction is verified according to the payment request information, and the payment result is generated.

Optionally, in the example, the non-volatile storage medium is configured to store program codes for executing the following step as follows: the payment request information includes at least one of identity information of the payee terminal, authentication information, a collection amount, and a network state of the payee terminal.

Optionally, in the example, the non-volatile storage medium is configured to store program codes for executing the following step that the target transaction is verified according to the payment request information, and the payment result is generated as follows: a digital currency string corresponding to the target transaction is generated according to the payment request information in a case that the network state of the payee terminal is that the payee terminal is not connected to the Internet, where the payment result includes the digital currency string; and a payment state information corresponding to the target transaction is generated according to the payment request information in a case that the network state of the payee terminal is that the payee terminal is connected to the Internet, where the payment result includes the payment state information, and the payment state information is configured to describe whether the payment is made to the payee terminal.

Optionally, in the example, the non-volatile storage medium is configured to store program codes for executing the following step as follows: a key type of the first key includes either one of an elliptic curve encryption algorithm key and an RSA algorithm key.

Optionally, in the example, the non-volatile storage medium is configured to store program codes for executing the following step as follows: the secure channel includes at least one of an I2C bus and an SPI bus.

Optionally, in the example, the non-volatile storage medium is configured to store program codes for executing the following steps that payment request information is received through an Ultra-Wideband (UWB) chip, where the payment request information is sent by the payee terminal through the UWB channel, and configured to request the payer terminal to complete a target transaction, and the target transaction is to make payment from the payer terminal to the payee terminal; the payment request information is encrypted by the UWB chip with a first key, so as to obtain encrypted information; the encrypted information is transmitted to a secure element by the UWB chip through a secure channel; the target transaction is verified by the secure element according to the encrypted information, and a payment result is generated; the payment result is returned to the UWB chip by the secure element; and the payment result is sent to the payee terminal by the UWB chip through the UWB channel.

Optionally, in the example, the non-volatile storage medium is configured to store program codes for executing the following step that the payment request information is encrypted by the UWB chip with a first key, so as to obtain encrypted information as follows: the first key corresponding to the secure channel is invoked by the UWB chip, where the first key is pre-stored in the UWB chip; and the payment request information is encrypted by the UWB chip with the first key, so as to obtain the encrypted information.

Optionally, in the example, the non-volatile storage medium is configured to store program codes for executing the following step that the target transaction is verified by the secure element according to the encrypted information, and a payment result is generated as follows: a second key corresponding to the secure channel is invoked by the secure element, where the second key is pre-stored in the secure element, and matches the first key; the encrypted information is decrypted by the secure chip through the second key, so as to obtain payment request information; and the target transaction is verified by the secure element according to the payment request information, and the payment result is generated.

Optionally, in the example, the non-volatile storage medium is configured to store program codes for executing the following step as follows: the payment request information includes at least one of identity information of the payee terminal, authentication information, a collection amount, and a network state of the payee terminal.

Optionally, in the example, the non-volatile storage medium is configured to store program codes for executing the following step that the target transaction is verified by the secure element according to the payment request information, and the payment result is generated as follows: a digital currency string corresponding to the target transaction is generated by the secure element according to the payment request information in a case that the network state of the payee terminal is that the payee terminal is not connected to the Internet, where the payment result includes the digital currency string; and a payment state information corresponding to the target transaction is generated by the secure element according to the payment request information in a case that the network state of the payee terminal is that the payee terminal is connected to the Internet, where the payment result includes the payment state information, and the payment state information is configured to describe whether the payment is made to the payee terminal.

Optionally, in the example, the non-volatile storage medium is configured to store program codes for executing the following step as follows: a key type of the first key includes either one of an elliptic curve encryption algorithm key and an RSA algorithm key.

Optionally, in the example, the non-volatile storage medium is configured to store program codes for executing the following step as follows: the secure channel includes at least one of an I2C bus and an SPI bus.

Optionally, in the example, the non-volatile storage medium is configured to store program codes for executing the following steps that an Ultra-Wideband (UWB) channel with the payer terminal is established by a UWB chip of the payee terminal by broadcasting a UWB signal; a collection request sent by the payer terminal is received by the UWB chip of the payee terminal through the UWB channel, where the collection request is configured to request the payee terminal to complete a target transaction, and the target transaction is to make payment from the payer terminal to the payee terminal; the collection request is transmitted to a secure element of the payee terminal by the UWB chip of the payee terminal; encrypted payment request information is obtained on the basis of encrypting the collection request by the secure element of the payee terminal, and the payment request information is transmitted to the UWB chip of the payee terminal; the payment request information is sent to the payer terminal by the UWB chip of the payee terminal; a payment result returned by the payer terminal is received by the UWB chip of the payee terminal, and the payment result is transmitted to the secure element of the payee terminal; and the target transaction is verified by the secure element of the payee terminal based on the payment result.

Optionally, in the example, the non-volatile storage medium is configured to store program codes for executing the following step that encrypted payment request information is generated by the secure element of the payee terminal according to the collection request as follows: a networking state of the payee terminal is acquired from the payee terminal; a first encrypted collection mode request is generated by the secure element of the payee terminal in a case that the networking state of the payee terminal is online, where the payment request information includes the first collection mode request, and the first collection mode request is configured to instruct the payer terminal to return either one of the following two payment results: a digital currency string and payment state information; and a second encrypted collection mode request is generated by the secure element of the payee terminal in a case that the networking state of the payee terminal is offline, where the payment request information includes the second collection mode request, and the second collection mode request is configured to indicate that the payment result returned by the payer terminal is a digital currency string.

Optionally, in the example, the non-volatile storage medium is configured to store program codes for executing the following step that the target transaction is verified by the secure chip of the payee terminal based on the payment result as follows: the digital currency string is verified by the secure element of the payee terminal in a case that the payment result is the digital currency string, and it is determined that the payer terminal completes the target transaction in a case that the digital currency string passes verification; accounting information is generated by the secure element of the payee terminal according to the payment state information in a case that the payment result is the payment state information, and the accounting information is sent to a background of a bank through the payee terminal; an accounting information verification result returned by the background of the bank is received, and it is determined that the payer terminal completes the target transaction in a case that the accounting information verification result is that the accounting information passes verification.

The serial numbers of the examples of the disclosure are merely for description, and do not indicate the superiority and inferiority of the examples.

In the above examples of the disclosure, the description of each example has its own emphasis. Reference can be made to the relevant description in other examples for the part not described in detail in one example.

In several examples provided in the disclosure, it should be understood that the technical contents disclosed can be implemented in other ways. The apparatus examples described above are merely illustrative. For example, the units are divided by logical function. Other division methods can be employed during actual implementation. For example, a plurality of units or components can be combined or integrated into another system. Alternatively, it is possible to omit or not execute some features. Further, mutual coupling, direct coupling, or communication connection shown or discussed can be indirect coupling or communication connection through some interfaces, units, or modules in an electrical manner, etc.

The units described as separate components can be physically separated or not. The components shown as units can be physical units or not. In other words, the components can be positioned in one place or distributed over a plurality of units. Some or all units can be selected according to actual demands to implement the solution in the example.

Also, all function units in each example of the disclosure can be integrated into one processing unit. Alternatively, each unit can be physically present alone. Alternatively, two or more units can be integrated into one unit. The above integrated units can be implemented in a form of hardware or software function units.

If being implemented in the form of software function units and sold or used as independent products, the integrated units can be stored in a non-volatile readable storage medium. Based on such understanding, the technical solution of the disclosure in essence, the part that contributes to the prior art, or all or some of the technical solution can be embodied in a form of a software product. The computer software product is stored in one storage medium, and includes several instructions configured to enable a computer device (which may be a personal computer, a server, a network device, etc.) to execute all or some of the steps of the method in each example of the disclosure. The foregoing storage medium includes: various media capable of storing a program code, such as a universal serial bus (USB) flash disk, a read-only memory (ROM), a random access memory (RAM), a mobile hard disk, a magnetic disk, and an optical disk.

What are described above are merely preferred embodiments of the disclosure. It should be pointed out that those of ordinary skill in the art can also make several improvements and modifications without departing from the principles of the disclosure, and these improvements and modifications should also be deemed as falling within the scope of protection of the disclosure.

### Industrial Applicability

The solution according to the examples of the disclosure can be applied to the field of digital currencies. In the examples of the disclosure, the payment request information is encrypted in the UWB chip of the payer terminal, where the payment request information is encrypted with the first key, so as to obtain the encrypted information, the secure channel transmits the encrypted information to the secure element, and receives the payment result returned by the secure element, and the payment result is sent to the payee terminal through the UWB channel. Accordingly, transaction security in a process when the payer terminal executes the target transaction is ensured, and the technical effect of reducing transaction risks during a transaction based on a UWB technology is realized.

## Claims

1. A payment method based on an Ultra-Wideband (UWB), comprising:
receiving payment request information sent by a payee terminal through a UWB channel, wherein the payment request information is configured to request a payer terminal to complete a target transaction, and the target transaction is to make payment from the payer terminal to the payee terminal;
encrypting the payment request information with a first key, so as to obtain encrypted information;
transmitting the encrypted information to a security element through a secure channel, wherein the secure element is configured to verify the target transaction according to the encrypted information, and generate a payment result; and
receiving the payment result returned by the secure element, and sending the payment result to the payee terminal through the UWB channel.

2. The method as claimed in claim 1, wherein the encrypting the payment request information with a first key, so as to obtain encrypted information comprises:
invoking the first key corresponding to the secure channel, wherein the first key is pre-stored in a UWB chip of the payer terminal; and
encrypting the payment request information with the first key, so as to obtain the encrypted information.

3. The method as claimed in claim 2, wherein a key type of the first key comprises one of following: an elliptic curve encryption algorithm key and a Rivest-Shamir-Adleman (RSA) algorithm key.

4. The method as claimed in claim 1, wherein the secure channel comprises at least one of following: an Inter-Integrated Circuit (I2C) bus and a Serial Peripheral Interface (SPI) bus.

5. The method as claimed in any one of claims 1-4, wherein the payment request information comprises at least one of following: identity information of the payee terminal, authentication information, a collection amount, and a network state of the payee terminal.

6. The method as claimed in claim 5, wherein the receiving the payment result returned by the secure element comprises:
receiving a digital currency string returned by the secure element in a case that the payee terminal is not connected to an Internet, wherein the payment result comprises the digital currency string generated by the secure element according to the encrypted information; and
receiving payment state information returned by the secure element in a case that the payee terminal is connected to the Internet, wherein the payment result comprises the payment state information, and the payment state information is configured to describe whether the payer terminal completes the payment to the payee terminal.

7. A payment method based on an Ultra-Wideband (UWB), comprising:
receiving encrypted information transmitted by a UWB chip of a payer terminal through a secure channel, wherein the encrypted information is obtained by encrypting payment request information by the UWB chip with a first key, the payment request information is information configured to request to complete a target transaction, sent by a payee terminal, and received by the UWB chip, and the target transaction is to make payment from the payer terminal to the payee terminal;
verifying the target transaction according to the encrypted information, and generating a payment result; and
returning the payment result to the UWB chip.

8. The method as claimed in claim 7, wherein the verifying the target transaction according to the encrypted information, and generating a payment result comprise:
invoking a second key corresponding to the secure channel, wherein the second key is pre-stored in a secure element, and matches the first key;
decrypting the encrypted information through the second key, so as to obtain the payment request information; and
verifying the target transaction according to the payment request information, and generating the payment result.

9. The method as claimed in claim 8, wherein the payment request information comprises at least one of following: identity information of the payee terminal, authentication information, a collection amount, and a network state of the payee terminal.

10. The method as claimed in claim 9, wherein the verifying the target transaction according to the payment request information, and generating the payment result comprise:
generating a digital currency string corresponding to the target transaction according to the payment request information in a case that the payee terminal is not connected to an Internet, wherein the payment result comprises the digital currency string; and
generating payment state information corresponding to the target transaction according to the payment request information in a case that the payee terminal is connected to the Internet, wherein the payment result comprises the payment state information, and the payment state information is configured to describe whether the payment to the payee terminal is completed.

11. The method as claimed in claim 7, wherein a key type of the first key comprises one of following: an elliptic curve encryption algorithm key and an RSA algorithm key.

12. The method as claimed in claim 7, wherein the secure channel comprises at least one of following: an Inter-Integrated Circuit (I2C) bus and a Serial Peripheral Interface (SPI) bus.

13. A payment method based on an Ultra-Wideband, comprising:
receiving, by a UWB chip, payment request information, wherein the payment request information is sent by a payee terminal through a UWB channel, and configured to request a payer terminal to complete a target transaction, and the target transaction is to make payment from the payer terminal to the payee terminal;
encrypting, by the UWB chip, the payment request information with a first key, so as to obtain encrypted information;
transmitting, by the UWB chip, the encrypted information to a secure element through a secure channel;
verifying, by the secure element, the target transaction according to the encrypted information, and generating a payment result;
returning, by the secure element, the payment result to the UWB chip; and
sending, by the UWB chip, the payment result to the payee terminal through the UWB channel.

14. The method as claimed in claim 13, wherein the encrypting, by the UWB chip, the payment request information with a first key, so as to obtain encrypted information comprises:
invoking, by the UWB chip, the first key corresponding to the secure channel, wherein the first key is pre-stored in the UWB chip; and
encrypting, by the UWB chip, the payment request information with the first key, so as to obtain the encrypted information.

15. The method as claimed in claim 14, wherein the verifying, by the secure element, the target transaction according to the encrypted information, and generating a payment result comprise:
invoking, by the secure element, a second key corresponding to the secure channel, wherein the second key is pre-stored in the secure element, and matches the first key;
decrypting, by the secure element, the encrypted information through the second key, so as to obtain the payment request information; and
verifying, by the secure element, the target transaction according to the payment request information, and generating the payment result.

16. The method as claimed in claim 15, wherein the payment request information comprises at least one of following: identity information of the payee terminal, authentication information, a collection amount, and a network state of the payee terminal.

17. The method as claimed in claim 16, wherein the verifying, by the secure element, the target transaction according to the payment request information, and generating the payment result comprise:
generating, by the secure element, a digital currency string corresponding to the target transaction according to the payment request information in a case that the payee terminal is not connected to an Internet, wherein the payment result comprises the digital currency string; and
generating, by the secure element, payment state information corresponding to the target transaction according to the payment request information in a case that the payee terminal is connected to the Internet, wherein the payment result comprises the payment state information, and the payment state information is configured to describe whether the payment to the payee terminal is completed.

18. The method as claimed in claim 13, wherein a key type of the first key comprises one of following: an elliptic curve encryption algorithm key and an RSA algorithm key.

19. The method as claimed in claim 13, wherein the secure channel comprises at least one of following: an Inter-Integrated Circuit (I2C) bus and a Serial Peripheral Interface (SPI) bus.

20. A payment method based on an Ultra-Wideband (UWB), comprising:
establishing, by a UWB chip of a payee terminal, a UWB channel with a payer terminal by broadcasting a UWB signal;
receiving, by the UWB chip of the payee terminal, a collection request sent by the payer terminal through the UWB channel, wherein the collection request is configured to request the payee terminal to complete a target transaction, and the target transaction is to make payment from the payer terminal to the payee terminal;
transmitting, by the UWB chip of the payee terminal, the collection request to a secure element of the payee terminal;
generating, by the secure element of the payee terminal, encrypted payment request information according to the collection request, and transmitting the payment request information to the UWB chip of the payee terminal;
sending, by the UWB chip of the payee terminal, the payment request information to the payer terminal;
receiving, by the UWB chip of the payee terminal, a payment result returned by the payer terminal, and transmitting the payment result to the secure element of the payee terminal; and
verifying, by the secure element of the payee terminal, the target transaction based on the payment result.

21. The method as claimed in claim 20, wherein the generating, by the secure element of the payee terminal, encrypted payment request information according to the collection request comprises:
acquiring a networking state of the payee terminal from the payee terminal;
generating, by the secure element of the payee terminal, a first encrypted collection mode request in a case that the networking state of the payee terminal is online, wherein the payment request information comprises the first collection mode request, and the first collection mode request is configured to instruct the payer terminal to return either one of following two payment results: a digital currency string and payment state information; and
generating, by the secure element of the payee terminal, a second encrypted collection mode request in a case that the networking state of the payee terminal is offline, wherein the payment request information comprises the second collection mode request, and the second collection mode request is configured to indicate that the payment result returned by the payer terminal is a digital currency string.

22. The method as claimed in claim 21, wherein the verifying, by the secure element of the payee terminal, the target transaction based on the payment result comprises:
verifying, by the secure element of the payee terminal, the digital currency string in a case that the payment result is the digital currency string, and determining that the payer terminal completes the target transaction in a case that the digital currency string passes verification;
generating, by the secure element of the payee terminal, accounting information according to the payment state information in a case that the payment result is the payment state information, and sending the accounting information to a background of a bank through the payee terminal; and
receiving an accounting information verification result returned by the background of the bank, and determining that the payer terminal completes the target transaction in a case that the accounting information verification result is that the accounting information passes verification.

23. A payment apparatus based on an Ultra-Wideband (UWB), comprising:
a first reception module configured to receive payment request information sent by a payee terminal through a UWB channel, wherein the payment request information is configured to request a payer terminal to complete a target transaction, and the target transaction is to make payment from the payer terminal to the payee terminal;
a first encryption module configured to encrypt the payment request information with a first key, so as to obtain encrypted information;
a first transmission module configured to transmit the encrypted information to a secure element through a secure channel, wherein the secure element is configured to verify the target transaction according to the encrypted information, and generate a payment result; and
a first sending module configured to receive the payment result returned by the secure element, and send the payment result to the payee terminal through the UWB channel.

24. A payment apparatus based on an Ultra-Wideband (UWB), comprising:
a second reception module configured to receive encrypted information transmitted by a UWB chip through a secure channel, wherein the encrypted information is obtained by encrypting payment request information by the UWB chip with a first key, and the payment request information is information configured to request to complete a target transaction, sent by a payee terminal, and received by the UWB chip;
a first generation module configured to verify the target transaction according to the encrypted information, and generate a payment result; and
a first return module configured to return the payment result to the UWB chip.

25. A payment apparatus based on an Ultra-Wideband (UWB), comprising:
a third reception module configured to receive, by a UWB chip, payment request information, wherein the payment request information is information sent by a payee terminal through a UWB channel, and configured to request a payer terminal to complete a target transaction, the target transaction is to make payment from the payer terminal to the payee terminal, and the payer terminal comprises the UWB chip and a secure element;
a second encryption module configured to encrypt, by the UWB chip, the payment request information with a first key, so as to obtain encrypted information;
a second transmission module configured to transmit, by the UWB chip, the encrypted information to the secure element through a secure channel;
a second generation module configured to verify, by the secure element, the target transaction according to the encrypted information, and generate a payment result;
a second return module configured to return, by the secure element, the payment result to the UWB chip; and
a second sending module configured to send, by the UWB chip, the payment result to the payee terminal through the UWB channel.

26. A payment apparatus based on an Ultra-Wideband (UWB), comprising:
an establishment module configured to establish, by a UWB chip of a payee terminal, a UWB channel with a payer terminal by broadcasting a UWB signal;
a third sending module configured to receive, by the UWB chip of the payee terminal, a collection request sent by the payer terminal through the UWB channel, wherein the collection request is configured to request the payee terminal to complete a target transaction, and the target transaction is to make payment from the payer terminal to the payee terminal;
a third transmission module configured to transmit, by the UWB chip of the payee terminal, the collection request to a secure element of the payee terminal;
a third encryption module configured to generate, by the secure element of the payee terminal, encrypted payment request information according to the collection request, and transmit the payment request information to the UWB chip of the payee terminal;
a fourth sending module configured to send, by the UWB chip of the payee terminal, the payment request information to the payer terminal;
a fourth reception module configured to receive, by the UWB chip of the payee terminal, a payment result returned by the payer terminal, and transmit the payment result to the secure element of the payee terminal; and
a verification module configured to verify, by the secure element of the payee terminal, the target transaction based on the payment result.

27. A non-volatile storage medium, comprising a program stored, wherein the program controls a device where the non-volatile storage medium is positioned to execute the method for payment as claimed in any one of claims 1-22 when run.

28. A computer device, comprising a processor, wherein the processor is configured to run a program, and the program executes the method for payment as claimed in any one of claims 1-22 when run.

29. A payer terminal, comprising: a UWB chip, a secure element, and a secure channel; wherein
the secure channel is connected to the UWB chip and the secure element;
the UWB chip is configured to receive payment request information sent by a payee terminal through a UWB channel, wherein the payment request information is configured to request the payer terminal to complete a target transaction, and the target transaction is to make payment from the payer terminal to the payee terminal;
the UWB chip is further configured to encrypt the payment request information with a first key, so as to obtain encrypted information, transmit the encrypted information to the secure element through the secure channel, receive a payment result returned by the secure element, and send the payment result to the payee terminal through the UWB channel; and
the secure element is configured to verify the target transaction according to the encrypted information, generate the payment result, and return the payment result to the UWB chip.
